# EUROPEAN PATENT APPLICATION

(11) **EP 4 166 866 A1**
(43) Date of publication of application: **19.04.2023**
(21) Application number: 22201568.7
(22) Date of filing: 14.10.2022
(51) Int. Cl.: F25B 1/00, B33Y 80/00, F25B 25/00

(54) **INTEGRATED SUPPLEMENTAL COOLING UNIT**

(30) Priority: 15.10.2021 US 202117502366
(71) Applicant: Hamilton Sundstrand Corporation, Charlotte, NC 28217-4578 (US)
(72) Inventor: ARMY, Donald E., Enfield, 06082 (US)
(74) Representative: Dehns

(57) **Abstract**

An integrated vapor cycle system includes a compressor (16) including a compressor housing, a condenser (18) in fluid communication with the compressor, a flash tank (20) in fluid communication with the condenser, and an evaporator (24) in fluid communication with the flash tank and the compressor. The compressor, the condenser, the flash tank, and the evaporator define a refrigerant circuit circulating a volume of refrigerant therethrough. The compressor housing, the condenser, the flash tank, and the evaporator are formed together as a single unitary component.

## Description

### BACKGROUND

Exemplary embodiments pertain to the art of environmental control and refrigeration systems for, for example, aircraft.

In some aircraft, an integrated cooling system is utilized for thermal conditioning of various aircraft systems and locations, such as the cabin, galley, and other systems and locations.

Some such integrated cooling systems utilize several remotely located supplemental cooling units, which cool liquid supplied from the integrated cooling system to, for example, a galley supply heat exchanger and a recirculating cabin air heat exchanger, while rejecting heat to a power electronics cooling system (PECS) RAM heat exchanger. Currently, a typical supplemental cooling unit includes multiple line replaceable units or components, such as heat exchangers, compressor, flash tank, valves, sensors, tubing, fittings and the like that are mechanically and pneumatically assembled to a complex support frame.

### BRIEF DESCRIPTION

In one embodiment, an integrated vapor cycle system includes a compressor including a compressor housing, a condenser in fluid communication with the compressor, a flash tank in fluid communication with the condenser, and an evaporator in fluid communication with the flash tank and the compressor. The compressor, the condenser, the flash tank, and the evaporator define a refrigerant circuit circulating a volume of refrigerant therethrough. The compressor housing, the condenser, the flash tank, and the evaporator are formed together as a single unitary component.

Additionally or alternatively, in this or other embodiments a first refrigerant passage connects the compressor housing and the condenser, a second refrigerant passage connects the condenser and the flash tank, a third refrigerant passage connects the flash tank and the evaporator, and a fourth refrigerant passage connects the evaporator and the compressor housing. At least one of the first refrigerant passage, the second refrigerant passage, the third refrigerant passage and the fourth refrigerant passage is formed together with the single unitary component.

Additionally or alternatively, in this or other embodiments a condenser inlet port is formed in the condenser, and a condenser outlet port is formed in the condenser. The condenser inlet port and the condenser outlet port are configured to circulate a first flow of fluid through the condenser for thermal energy exchange with the flow of refrigerant.

Additionally or alternatively, in this or other embodiments the first flow of fluid is from a power electronics cooling system.

Additionally or alternatively, in this or other embodiments an evaporator inlet port is formed in the evaporator, and an evaporator outlet port is formed in the evaporator. The evaporator inlet port and the evaporator outlet port are configured to circulate a second flow of fluid through the evaporator for thermal energy exchange with the flow of refrigerant.

Additionally or alternatively, in this or other embodiments the second flow of fluid is from an integrated cooling system heat exchanger.

Additionally or alternatively, in this or other embodiments the compressor housing includes one or more open ends for installation of compressor components thereinto.

Additionally or alternatively, in this or other embodiments one or more end caps are installed at the one or more open ends to enclose the compressor.

Additionally or alternatively, in this or other embodiments the single unitary component is formed simultaneously via one or more additive manufacturing processes.

Additionally or alternatively, in this or other embodiments one or more ancillary components are operably connected to the single unitary component.

In another embodiment, an integrated supplemental cooling unit of an aircraft includes a compressor including a compressor housing, a condenser in fluid communication with the compressor, a flash tank in fluid communication with the condenser, and an evaporator in fluid communication with the flash tank and the compressor. The compressor, the condenser, the flash tank, and the evaporator define a refrigerant circuit circulating a volume of refrigerant therethrough, and the compressor housing, the condenser, the flash tank, and the evaporator are formed together as a single unitary component. The integrated supplemental cooling unit provides cooling for one or more galleys and / or a cabin of an aircraft.

Additionally or alternatively, in this or other embodiments a first refrigerant passage connects the compressor housing and the condenser, a second refrigerant passage connects the condenser and the flash tank, a third refrigerant passage connects the flash tank and the evaporator, and a fourth refrigerant passage connects the evaporator and the compressor housing. At least one of the first refrigerant passage, the second refrigerant passage, the third refrigerant passage and the fourth refrigerant passage is formed together with the single unitary component.

Additionally or alternatively, in this or other embodiments a condenser inlet port is formed in the condenser, and a condenser outlet port formed in the condenser. The condenser inlet port and the condenser outlet port are configured to circulate a first flow of fluid through the condenser for thermal energy exchange with the flow of refrigerant.

Additionally or alternatively, in this or other embodiments the first flow of fluid is from a power electronics cooling system.

Additionally or alternatively, in this or other embodiments an evaporator inlet port is formed in the evaporator, and an evaporator outlet port is formed in the evaporator. The evaporator inlet port and the evaporator outlet port are configured to circulate a second flow of fluid through the evaporator for thermal energy exchange with the flow of refrigerant.

Additionally or alternatively, in this or other embodiments the second flow of fluid is from an integrated cooling system heat exchanger.

Additionally or alternatively, in this or other embodiments the compressor housing includes one or more open ends for installation of compressor components thereinto.

Additionally or alternatively, in this or other embodiments one or more end caps are installed at the one or more open ends to enclose the compressor.

Additionally or alternatively, in this or other embodiments the single unitary component is formed simultaneously via one or more additive manufacturing processes.

Additionally or alternatively, in this or other embodiments the single unitary component is formed from one of corrosion resistant stainless steel or titanium.

### BRIEF DESCRIPTION OF THE DRAWINGS

The following descriptions should not be considered limiting in any way. With reference to the accompanying drawings, like elements are numbered alike:
FIG. 1 is a schematic diagram of an embodiment of a supplemental cooling unit for an aircraft;
FIG. 2 is a perspective view of an embodiment of an integrated supplemental cooling unit; and
FIG. 3 is a top view of an embodiment of an integrated supplemental cooling unit.

### DETAILED DESCRIPTION

A detailed description of one or more embodiments of the disclosed apparatus and method are presented herein by way of exemplification and not limitation with reference to the Figures. The integrated supplemental cooling unit described herein leverages additive manufacturing capabilities to combine and simplify the supplemental cooling unit components and assembly. Further, while the description herein relates to a supplemental cooling unit for an aircraft, one skilled in the art will readily appreciate that the present disclosure may be readily applied to other vapor cycle systems.

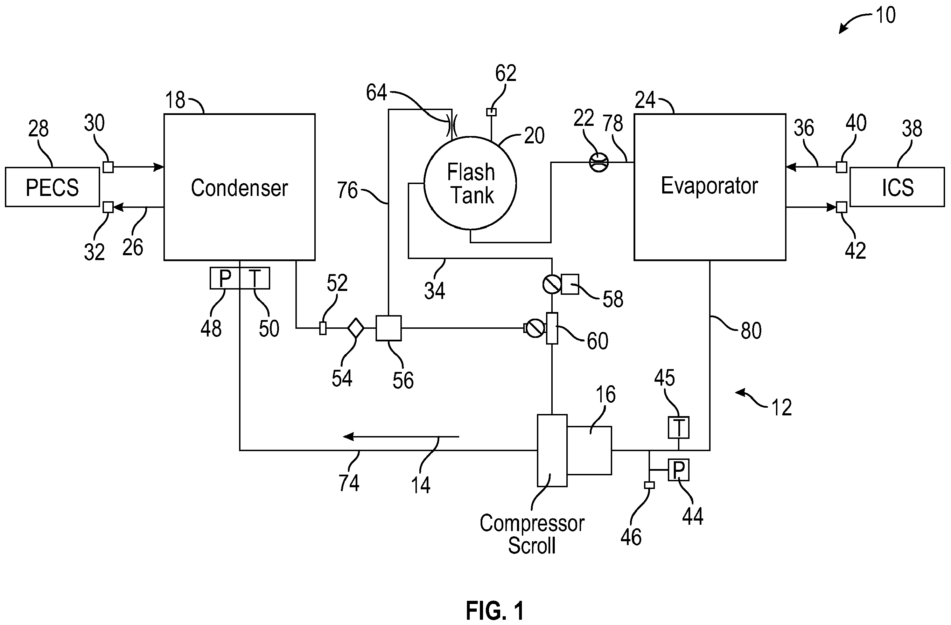

Referring now to FIG. 1, shown is a schematic diagram of an embodiment of an integrated supplemental cooling unit (ISCU) 10. The ISCU 10 includes a refrigerant circuit 12 in which a flow of refrigerant 14 is circulated through a compressor 16, a condenser 18, a flash tank 20, an expansion device 22, and an evaporator 24. The flow of refrigerant 14 is compressed at the compressor 16 and directed to the condenser 18 via a first refrigerant passage 74, where the high pressure vapor flow of refrigerant 14 exchanges thermal energy with a first flow of fluid 26 circulated from a power electronics cooling system (PECS) heat exchanger 28. The first flow of fluid 26 enters the condenser 18 through a condenser inlet port 30 and exits the condenser 18 through a condenser outlet port 32. The heated first flow of fluid 26 is returned to the PECS heat exchanger 28. This thermal energy exchange cools and condenses the flow of refrigerant 14, which is then directed to the flash tank 20 via a second refrigerant passage 76, where vapor refrigerant 34 is separated out from the flow of liquid refrigerant 14. The vapor refrigerant 34 is diverted back to the compressor 16, while the flow of liquid refrigerant 14 passes through the expansion device 22, which in some embodiments is an electronic expansion valve, and to the evaporator 24 via a third refrigerant passage 78. At the evaporator 24, the flow of refrigerant 14 is converted to vapor by thermal energy exchange with a second flow of fluid 36 from an integrated cooling system (ICS) heat exchanger 38, which is, for example, a galley heat exchanger used to cool one or more galleys of the aircraft or a cabin return air heat exchanger utilized to cool return airflow from a cabin of the aircraft. The second flow of fluid 36 enters the evaporator 24 through an evaporator inlet port 40 and exits the evaporator 24 through an evaporator outlet port 42. After exiting the evaporator 24, the second flow of fluid 36 is returned to the ICS heat exchanger 38. The vapor flow of refrigerant 14 is returned to the compressor 16 via a fourth refrigerant passage 80.

In some embodiments, the ISCU 10 includes various sensors, valves and other components such a compressor inlet pressure sensor 44, a compressor inlet temperature sensor 45, a low pressure fill and bleed valve 46, a compressor discharge pressure sensor 48, a compressor discharge temperature sensor 50, a burst disk 52, a filter/dryer 54, a quench trap 56, a compressor overtemperature valve 60, a flash tank pressurization valve 58, a high pressure charge port 62 located at the flash tank 20, and a fixed orifice 64 at a flash tank 20 inlet.

The burst disk 52 is a frangible disk designed to relieve the refrigerant pressure if the ISCU 10 were to exceed the burst pressure rating of the components. For example, ambient temperatures greater than 185 degrees F could potentially raise the refrigerant pressure to unsafe levels. The filter/dryer 54 contains a desiccant / screen to protect the ISCU 10 from internal foreign object damage (FOD) or undesirable moisture. The quench trap 56 is a cannister used to collect a small amount of liquid refrigerant prior to the flash tank 20, that is flashed across the compressor overtemperature valve 60 orifice to cool the flow into a (center) economizer port of the compressor (when required). The flash tank pressurization valve 58 is used to regulate the pressure into the compressor economizer port.

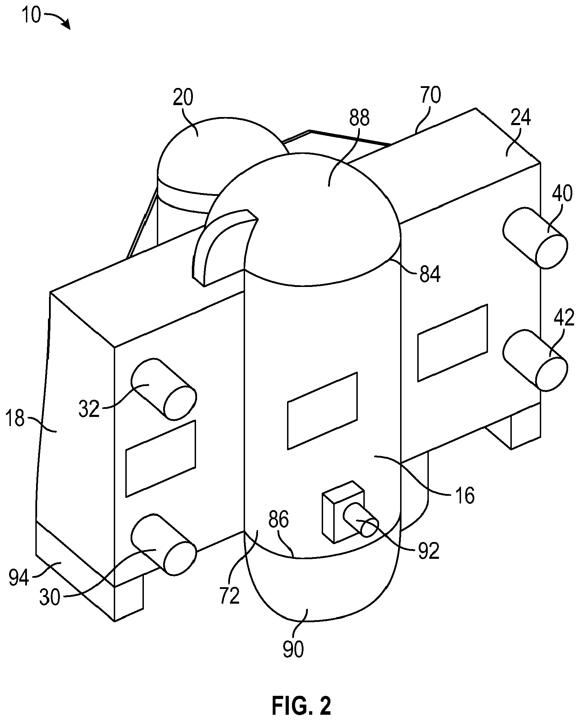

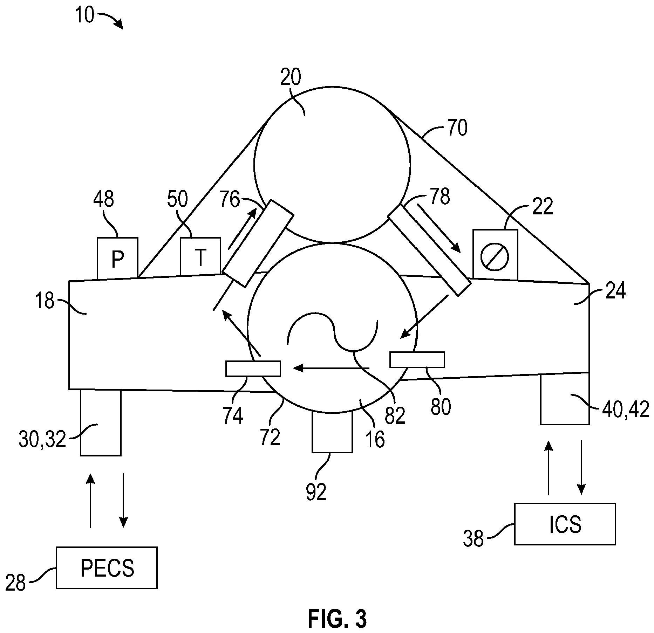

Referring now to FIGs. 2 and 3, the main static components of the ISCU 10 are formed together as a single unitary article 70 by, for example, one or more additive manufacturing processes to form. In some embodiments, the unitary article 70 is formed from corrosion resistant stainless steel (CRES) or titanium. The unitary article 70 In the illustrated embodiment, the unitary article 70 includes a compressor housing 72, the condenser 18, the flash tank 20 and the evaporator 24 formed together simultaneously via the one or more additive manufacturing operations. Further, a plurality of refrigerant passages connecting these main components. For example, as shown in FIG. 3, the unitary article 70 includes the first refrigerant passage 74 extending entirely between and connecting the compressor 16 and the condenser 18, the second refrigerant passage 76 extending entirely between and connecting the condenser 18 and the flash tank 20, the third refrigerant passage 78 extending entirely between and connecting the flash tank 20 and the evaporator 24, and the fourth refrigerant passage 80 extending entirely between and connecting the evaporator 24 and the compressor 16. Forming the refrigerant passages 74, 76, 78, 80 as part of the unitary article 70 reduces tubing and/or piping utilized in the ISCU 10, simplifying the assembly and reducing the potential for leaks in the ISCU 10.

Additionally, the condenser inlet port 30 and the condenser outlet port 32 are formed in the unitary article 70 for connection with the PECS heat exchanger 28. Similarly, the evaporator inlet port 40 and the evaporator outlet port 42 are formed in the unitary article 70 for connection to the ICS heat exchanger 38. The unitary article 70 further includes fittings or openings for attachment of other components to the ISCU 10, such as the expansion device 22, the compressor discharge pressure sensor 48, the compressor discharge temperature sensor 50, power connection 92, and/or other ancillary components such as the compressor inlet pressure sensor 44, the low pressure fill and bleed valve 46, the compressor discharge pressure sensor 48, the compressor discharge temperature sensor 50, the burst disk 52,the filter/dryer 54, the quench trap 56, the compressor overtemperature valve 60, and the flash tank pressurization valve 58 . The components intersect the integrated refrigerant passages 74, 76, 78, 80 as needed to minimize leaks in the ISCU 10. The moving components of the compressor 16, such as a compressor rotor 82, are installed through open ends 84, 86 of the compressor housing 72. After installation of the moving components, compressor end caps 88, 90 are installed onto the open ends 84, 86 respectively of the compressor housing 72. The unitary article 70 further includes mounting features 94 to secure the ISCU 10 at a selected location of the aircraft.

Utilizing the unitary article 70 in the ISCU 10 reduces volume of the supplemental cooling unit relative to typical supplemental cooling unit assemblies, and further reduces weight, part count/complexity of the structure, and also eliminates the frame utilized to house and mount the components of a traditional supplemental cooling unit.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. An integrated vapor cycle system, comprising:
a compressor (16) including a compressor housing;
a condenser (18) in fluid communication with the compressor;
a flash tank (20) in fluid communication with the condenser; and
an evaporator (24) in fluid communication with the flash tank and the compressor;
wherein the compressor, the condenser, the flash tank, and the evaporator define a refrigerant circuit circulating a volume of refrigerant therethrough; and
wherein the compressor housing, the condenser, the flash tank, and the evaporator are formed together as a single unitary component.

2. The integrated vapor cycle system of claim 1, further comprising:
a first refrigerant passage (74) connecting the compressor housing and the condenser;
a second refrigerant passage (76) connecting the condenser and the flash tank;
a third refrigerant passage (78) connecting the flash tank and the evaporator; and
a fourth refrigerant passage (80) connecting the evaporator and the compressor housing;
wherein at least one of the first refrigerant passage, the second refrigerant passage, the third refrigerant passage and the fourth refrigerant passage is formed together with the single unitary component.

3. The integrated vapor cycle system of claim 1 or 2, further comprising:
a condenser inlet port (30) formed in the condenser; and
a condenser outlet port (32) formed in the condenser;
wherein the condenser inlet port and the condenser outlet port are configured to circulate a first flow of fluid through the condenser for thermal energy exchange with the flow of refrigerant.

4. The integrated vapor cycle system of claim 3, wherein the first flow of fluid is from a power electronics cooling system.

5. The integrated vapor cycle system of any preceding claim, further comprising:
an evaporator inlet port (40) formed in the evaporator; and
an evaporator outlet port (42) formed in the evaporator;
wherein the evaporator inlet port and the evaporator outlet port are configured to circulate a second flow of fluid through the evaporator for thermal energy exchange with the flow of refrigerant.

6. The integrated vapor cycle system of claim 5, wherein the second flow of fluid is from an integrated cooling system heat exchanger.

7. The integrated vapor cycle system of any preceding claim, wherein the compressor housing includes one or more open ends (84, 86) for installation of compressor components thereinto.

8. The integrated vapor cycle system of claim 7, further comprising one or more end caps (88, 90) installed at the one or more open ends to enclose the compressor.

9. The integrated vapor cycle system of any preceding claim, wherein the system is a single unitary component formed simultaneously via one or more additive manufacturing processes.

10. The integrated vapor cycle system of claim 9, further composing one or more ancillary components operably connected to the single unitary component.

11. An integrated supplemental cooling unit of an aircraft, comprising:
an integrated vapor cycle system as claimed in any preceding claim
wherein the integrated supplemental cooling unit provides cooling for one or more galleys and / or a cabin of an aircraft.

12. The integrated supplemental cooling unit of claim 11, wherein the unit is a single unitary component formed from one of corrosion resistant stainless steel or titanium.
